# EUROPEAN PATENT APPLICATION

(11) **EP 4 800 041 A1**
(43) Date of publication of application: **02.09.2026**
(21) Application number: 24882846.9
(22) Date of filing: 24.10.2024
(51) Int. Cl.: C08F 212/08, C08F 220/18, C08F 220/06, H01M 4/62, H01M 4/13, H01M 10/052, H01M 4/02

(54) **COPOLYMER, VISCOSITY REDUCER AND CATHODE SLURRY COMPOSITION EACH COMPRISING COPOLYMER, CATHODE COMPRISING CATHODE SLURRY COMPOSITION, AND SECONDARY BATTERY COMPRISING CATHODE**

(30) Priority: 24.10.2023 KR 20230142897
(71) Applicant: Hansol Chemical Co., Ltd, Seoul 06169 (KR)
(72) Inventor: EOM, Jin-Ju, Wanju-gun, Jeonbuk-do 55321 (KR); OH, Sang-Yeop, Wanju-gun, Jeonbuk-do 55321 (KR); KIM, Kwang-In, Wanju-gun, Jeonbuk-do 55321 (KR); KWON, Se-Man, Wanju-gun, Jeonbuk-do 55321 (KR)
(74) Representative: Ipsilon
(86) International application number: PCT/KR2024/016254
(87) International publication number: WO 2025/089819

(57) **Abstract**

The present invention relates to a copolymer and a viscosity reducer comprising same and, more specifically, to a copolymer, and a viscosity reducer, a cathode slurry composition, a cathode, and a secondary battery each comprising same, wherein the copolymer enables the preparation of a cathode slurry composition with low viscosity and excellent dispersibility and the manufacture of a cathode having superior binding strength between a cathode active material and a current collector.

## Description

### Technical Field

The present disclosure relates to a copolymer, a viscosity reducer using the copolymer, a cathode slurry composition, a cathode, and a secondary battery. More specifically, the present disclosure relates to a copolymer and a viscosity reducer, a cathode slurry composition, a cathode, and a secondary battery, each including the copolymer, wherein the copolymer enables the preparation of a cathode slurry composition with low viscosity at the same solid content.

### Background Art

With high energy density, lithium secondary batteries are being extensively used in electrical, electronic, telecommunication, and computer fields. Furthermore, application fields of lithium secondary batteries are being expanded to high-capacity secondary batteries for hybrid vehicles, electric vehicles, and the like, in addition to small lithium secondary batteries for portable electronic devices.

As such application fields expand, interest in the development of lithium secondary batteries is also increasing. In particular, due to the increase in demand following the expansion of lithium secondary battery applications, there is a need to improve the production speed of secondary batteries.

A lithium secondary battery typically includes a cathode with a cathode active material layer formed on at least one surface of a cathode current collector, an anode with an anode active material layer formed on at least one surface of an anode current collector, and a separator interspersed between the anode and the cathode to electrically isolate the two.

The cathode and anode included in such a lithium secondary battery may be collectively referred to as electrodes. In order to improve the production speed of these electrodes, a method of increasing the solid content of an electrode slurry can be used. However, when the solid content of the electrode slurry exceeds a certain level, the viscosity of the electrode slurry composition increases, thereby imposing a load on equipment and making it difficult to carry out the process. Accordingly, there is a need to develop an electrode slurry composition not only with low viscosity and excellent dispersibility but also with superior binding strength between electrode active materials or between an electrode active material and a current collector.

### [Document of related art]

### [Patent Document]

(Patent Document 1) Korean Patent Application Publication No. 2022-0078615

### Disclosure

### Technical Problem

The present disclosure aims to provide a copolymer and a viscosity reducer, a cathode slurry composition, a cathode, and a secondary battery, each including the copolymer, wherein the copolymer enables the preparation of a cathode slurry composition with low viscosity and excellent dispersibility and the manufacture of a cathode having superior binding strength between a cathode active material and a current collector.

However, the problems to be solved by the present application are not limited to the aforementioned description, and other problems not mentioned can be clearly understood by those skilled in the art from the following description.

### Technical Solution

In one aspect of the present application,
a copolymer including: one or more monomer units selected from the group consisting of an acrylate-based monomer unit containing one or more substituted or unsubstituted aromatic or aliphatic rings and a vinyl-based monomer unit containing one or more substituted or unsubstituted aromatic or aliphatic rings;
one or more monomer units selected from the group consisting of an acrylate-based monomer unit containing a straight-chain or branched-chain aliphatic hydrocarbon having 5 to 22 carbon atoms and a polar monomer unit including one or more selected from the group consisting of cyano (CN), pyrrolidone (NC₄H₆O), carboxylic acid (COOH), amide, alkylamide, dialkylamide, alcohol, an epoxy group, caprolactam (C₅H₁₀CNO), morpholine (C₄H₈NO), and oxazolidone (C₃H₄NO₂); and
one or more monomer units selected from the group consisting of an acrylate-based monomer unit containing a straight-chain or branched-chain aliphatic hydrocarbon having 1 to 4 carbon atoms and a vinyl acetate-based monomer unit,
is provided.

In yet another aspect of the present application,
a viscosity reducer including the copolymer
is provided.

In yet another aspect of the present application,
a cathode slurry composition including: the copolymer; and
a cathode active material,
is provided.

In yet another aspect of the present application,
a cathode including: a current collector; and
a cathode active material layer formed by applying the cathode slurry composition on the current collector,
is provided.

In yet another aspect of the present application,
a secondary battery including the cathode
is provided.

### Advantageous Effects

As described above, a cathode slurry composition including a copolymer of the present disclosure exhibits low viscosity even when the solid content of the slurry is high, and thus can improve processability and production speed.

In addition, the cathode slurry composition including the copolymer of the present disclosure exhibits excellent dispersibility and enables the manufacture of a cathode having superior binding strength between a cathode active material and a current collector.

### Best Mode

It should be noted that all terms or words used herein and used in the appended claims are not construed as being limited to general or dictionary meanings but will be interpreted based on the meanings and concepts corresponding to the technical ideas of the present disclosure, following the principle that any inventor is allowed to define the concepts of terms as appropriate to describe the disclosure thereof in the best mode.

Therefore, the embodiments described herein are configured merely as one of the most preferable examples of the present disclosure and do not exhaustively represent the technical idea of the present disclosure. Accordingly, it should be appreciated that there may be various equivalents and modifications that can replace these embodiments as of the filing date of the present application.

As used herein, the singular expressions are intended to include the plural forms unless the context clearly indicates otherwise. It will be further understood that the terms "comprise", "include", "have", and the like when used herein, are intended to specify the presence of stated features, integers, steps, constituent elements, or combinations thereof but do not preclude the possibility of the presence or addition of one or more other features, integers, steps, constituent elements, or combinations thereof.

When various parameters are given herein as a range, preferred range, or enumeration of preferred upper and lower values, it should be understood to specifically disclose all ranges formed by pairing any upper range limit or a preferred value with any lower range limit or a preferred value, regardless of whether such ranges are separately disclosed.

When a range of numerical values is described herein, this range is intended to include not only the endpoints but also all integers and fractions within the range, unless otherwise specified. The scope of the present disclosure is not intended to be limited to the specific values mentioned when defining ranges.

As used herein, the expression "a to b" to represent a numerical range is defined as ≥ a and ≤ b.

A copolymer according to one aspect of the present disclosure may include: one or more monomer units selected from the group consisting of an acrylate-based monomer unit containing one or more substituted or unsubstituted aromatic or aliphatic rings and a vinyl-based monomer unit containing one or more substituted or unsubstituted aromatic or aliphatic rings; one or more monomer units selected from the group consisting of an acrylate-based monomer unit containing a straight-chain or branched-chain aliphatic hydrocarbon having 5 to 22 carbon atoms and a polar monomer unit including one or more selected from the group consisting of cyano (CN), pyrrolidone (NC₄H₆O), carboxylic acid (COOH), amide, alkylamide, dialkylamide, alcohol, an epoxy group, caprolactam (C₅H₁₀CNO), morpholine (C₄H₈NO), and oxazolidone (C₃H₄NO₂); one or more monomer units selected from the group consisting of an acrylate-based monomer unit containing a straight-chain or branched-chain aliphatic hydrocarbon having 1 to 4 carbon atoms and a vinyl acetate-based monomer unit.

In one embodiment, the one or more monomer units selected from the group consisting of the acrylate-based monomer unit containing one or more substituted or unsubstituted aromatic or aliphatic rings and the vinyl-based monomer unit containing one or more substituted or unsubstituted aromatic or aliphatic rings may be formed by polymerization of styrene, cyclopentyl acrylate, cyclohexyl acrylate, benzyl acrylate, 3-phenoxy benzyl acrylate, σ-phenyl phenoxy ethyl acrylate, σ-phenyl phenoxy ethyl methacrylate, (1-pyrene) 2-methyl-2-propenoate, 1-naphthyl acrylate, 1-naphthyl methacrylate, 2-naphthyl acrylate, 2-naphthyl methacrylate, 9-anthracene methyl acrylate, 9-anthracene methyl methacrylate, or a combination thereof.

Preferably, the one or more monomer units selected from the group consisting of the acrylate-based monomer unit containing one or more substituted or unsubstituted aromatic or aliphatic rings and the vinyl-based monomer unit containing one or more substituted or unsubstituted aromatic or aliphatic rings are formed by polymerization of styrene.

In one embodiment, the acrylate-based monomer unit containing a straight-chain or branched-chain aliphatic hydrocarbon having 5 to 22 carbon atoms may be formed by polymerization of n-pentyl (meth)acrylate, n-hexyl (meth)acrylate, n-heptyl (meth)acrylate, n-octyl (meth)acrylate, 2-ethylhexyl (meth)acrylate, n-nonyl (meth)acrylate, n-decyl (meth)acrylate, n-undecyl (meth)acrylate, lauryl (meth)acrylate, n-dodecyl (meth)acrylate, n-tridecyl (meth)acrylate, n-tetradecyl (meth)acrylate, n-pentadecyl (meth)acrylate, cetyl (meth)acrylate, n-hexadecyl (meth)acrylate, n-heptadecyl (meth)acrylate, stearyl (meth)acrylate, n-nonadecyl (meth)acrylate, n-eicosyl (meth)acrylate, n-heneicosyl (meth)acrylate, n-docosyl (meth)acrylate, isopentyl (meth)acrylate, isoheptyl (meth)acrylate, isooctyl (meth)acrylate, isononyl (meth)acrylate, isodecyl (meth)acrylate, isoundecyl (meth)acrylate, isododecyl (meth)acrylate, isotridecyl (meth)acrylate, isotetradecyl (meth)acrylate, isopentadecyl (meth)acrylate, isocetyl (meth)acrylate, isohexadecyl (meth)acrylate, isoheptadecyl (meth)acrylate, isostearyl (meth)acrylate, isononadecyl (meth)acrylate, isoeicosyl (meth)acrylate, isoheneicosyl (meth)acrylate, isodocosyl (meth)acrylate, or a combination thereof.

Preferably, the acrylate-based monomer unit containing a straight-chain or branched-chain aliphatic hydrocarbon having 5 to 22 carbon atoms is formed by polymerization of stearyl acrylate.

In one embodiment, the polar monomer unit including one or more selected from the group consisting of cyano (CN), pyrrolidone (NC₄H₆O), carboxylic acid (COOH), amide, alkylamide, dialkylamide, alcohol, an epoxy group, caprolactam (C₅H₁₀CNO), morpholine (C₄H₈NO), and oxazolidone (C₃H₄NO₂) may be formed by polymerization of acrylonitrile, vinylpyrrolidone, acrylic acid, methacrylic acid, itaconic acid, acrylamide, N-methyl acrylamide, 2-hydroxyethyl acrylate, 2-hydroxyethyl methacrylate, glycidyl methacrylate, or a combination thereof.

Preferably, the polar monomer unit including one or more selected from the group consisting of cyano (CN), pyrrolidone (NC₄H₆O), carboxylic acid (COOH), amide, alkylamide, dialkylamide, alcohol, an epoxy group, caprolactam (C₅H₁₀CNO), morpholine (C₄H₈NO), and oxazolidone (C₃H₄NO₂) is formed by polymerization of acrylic acid.

In one embodiment, the acrylate-based monomer unit containing a straight-chain or branched-chain aliphatic hydrocarbon having 1 to 4 carbon atoms may be formed by polymerization of methyl acrylate, methyl methacrylate, ethyl acrylate, ethyl methacrylate, butyl acrylate, butyl methacrylate, or a combination thereof, and the vinyl acetate-based monomer unit may be formed by polymerization of vinyl acetate.

Preferably, the copolymer may include a monomer unit formed by polymerization of methyl acrylate, ethyl acrylate, vinyl acetate, or a combination thereof.

When the copolymer includes the monomer unit formed by polymerization of methyl acrylate, ethyl acrylate, vinyl acetate, or a combination thereof, it has the effect of enhancing binding strength.

The one or more monomer units selected from the group consisting of the acrylate-based monomer unit containing a straight-chain or branched-chain aliphatic hydrocarbon having 1 to 4 carbon atoms and the vinyl acetate-based monomer unit have the effect of enhancing binding strength between a cathode active material and a current collector. In other words, copolymers that do not include monomer units effective in enhancing binding strength may have difficulty in assembly due to detachment of the cathode active material layer from the current collector. Copolymers that include monomer units effective in enhancing binding strength can prevent the detachment of the cathode active material from the electrode because the viscosity of a cathode slurry composition is low, and the binding strength between the cathode active material and the current collector is excellent, thereby enabling the manufacture of secondary batteries with excellent life characteristics.

In one embodiment, the copolymer may be formed by polymerization of styrene, stearyl acrylate, acrylic acid, and methyl acrylate, by polymerization of styrene, stearyl acrylate, acrylic acid, and ethyl acrylate, or by polymerization of styrene, stearyl acrylate, acrylic acid, and vinyl acetate.

In one embodiment, the copolymer, based on 100 mol% thereof, may include: 1 mol% or more and 60 mol% or less of the one or more monomer units selected from the group consisting of the acrylate-based monomer unit containing one or more substituted or unsubstituted aromatic or aliphatic rings and the vinyl-based monomer unit containing one or more substituted or unsubstituted aromatic or aliphatic rings; 5 mol% or more and 80 mol% or less of the one or more monomer units selected from the group consisting of the acrylate-based monomer unit containing a straight-chain or branched-chain aliphatic hydrocarbon having 5 to 22 carbon atoms and the polar monomer unit including one or more selected from the group consisting of cyano (CN), pyrrolidone (NC₄H₆O), carboxylic acid (COOH), amide, alkylamide, dialkylamide, alcohol, an epoxy group, caprolactam (C₅H₁₀CNO), morpholine (C₄H₈NO), and oxazolidone (C₃H₄NO₂); and 5 mol% or more and 40 mol% or less of the one or more monomer units selected from the group consisting of the acrylate-based monomer unit containing a straight-chain or branched-chain aliphatic hydrocarbon having 1 to 4 carbon atoms and the vinyl acetate-based monomer unit.

The copolymer, based on 100 mol% thereof, may include, for example, 1 mol% or more and 60 mol% or less, 10 mol% or more and 50 mol% or less, or 15 mol% or more and 45 mol% or less of the one or more monomer units selected from the group consisting of the acrylate-based monomer unit containing one or more substituted or unsubstituted aromatic or aliphatic rings and the vinyl-based monomer unit containing one or more substituted or unsubstituted aromatic or aliphatic rings. However, either the content of the acrylate-based monomer unit or the content of the vinyl-based monomer unit may be 0 mol%. When the content of the one or more monomer units selected from the group consisting of the acrylate-based monomer unit containing one or more substituted or unsubstituted aromatic or aliphatic rings and the vinyl-based monomer unit containing one or more substituted or unsubstituted aromatic or aliphatic rings falls below the aforementioned range, the dispersibility may be weakened, making effective mixing of the slurry composition difficult. In contrast, when the content of the one or more monomer units selected from the group consisting of the acrylate-based monomer unit containing one or more substituted or unsubstituted aromatic or aliphatic rings and the vinyl-based monomer unit containing one or more substituted or unsubstituted aromatic or aliphatic rings exceeds the aforementioned range, the proportion of other monomers may decrease, resulting in an increase in viscosity or a decrease in binding strength.

In addition, the copolymer, based on 100 mol% thereof, may include, for example, 5 mol% or more and 80 mol% or less, 10 mol% or more and 70 mol% or less, 15 mol% or more and 60 mol% or less, or 20 mol% or more and 50 mol% or less of the acrylate-based monomer unit containing a straight-chain or branched-chain aliphatic hydrocarbon having 5 to 22 carbon atoms. When the content of the acrylate-based monomer unit containing a straight-chain or branched-chain aliphatic hydrocarbon having 5 to 22 carbon atoms falls below the aforementioned range, the viscosity may increase excessively. In contrast, when the content of the acrylate-based monomer unit containing a straight-chain or branched-chain aliphatic hydrocarbon having 5 to 22 carbon atoms exceeds the aforementioned range, the nonpolarity may increase and thus may be precipitated from a polar solvent.

Furthermore, the copolymer, based on 100 mol% thereof, may include, for example, 0 mol% or more and 60 mol% or less, 0 mol% or more and 50 mol% or less, or 0 mol% or more and 40 mol% or less of the polar monomer unit including one or more selected from the group consisting of cyano (CN), pyrrolidone (NC₄H₆O), carboxylic acid (COOH), amide, alkylamide, dialkylamide, alcohol, an epoxy group, caprolactam (C₅H₁₀CNO), morpholine (C₄H₈NO), and oxazolidone (C₃H₄NO₂). When the content of the polar monomer unit including one or more selected from the group consisting of cyano (CN), pyrrolidone (NC₄H₆O), carboxylic acid (COOH), amide, alkylamide, dialkylamide, alcohol, an epoxy group, caprolactam (C₅H₁₀CNO), morpholine (C₄H₈NO), and oxazolidone (C₃H₄NO₂) exceeds the aforementioned range, the compatibility with a polar solvent may increase excessively. Accordingly, the active material may fail to disperse, resulting in phase separation of the slurry composition.

The copolymer, based on 100 mol% thereof, may include, for example, 5 mol% or more and 40 mol% or less, 5 mol% or more and 30 mol% or less, or 5 mol% or more and 20 mol% or less of the one or more monomer units selected from the group consisting of the acrylate-based monomer unit containing a straight-chain or branched-chain aliphatic hydrocarbon having 1 to 4 carbon atoms and the vinyl acetate-based monomer unit. When the content of the one or more monomer units selected from the group consisting of the acrylate-based monomer unit containing a straight-chain or branched-chain aliphatic hydrocarbon having 1 to 4 carbon atoms and the vinyl acetate-based monomer unit falls below the aforementioned range, the effect of enhancing binding may be insignificant, causing detachment from the current collector. In contrast, when the content of the one or more monomer units selected from the group consisting of the acrylate-based monomer unit containing a straight-chain or branched-chain aliphatic hydrocarbon having 1 to 4 carbon atoms and the vinyl acetate-based monomer unit exceeds the aforementioned range, the viscosity reduction effect of the slurry composition may decrease.

In one embodiment, the copolymer may be represented by Formula 1 below.

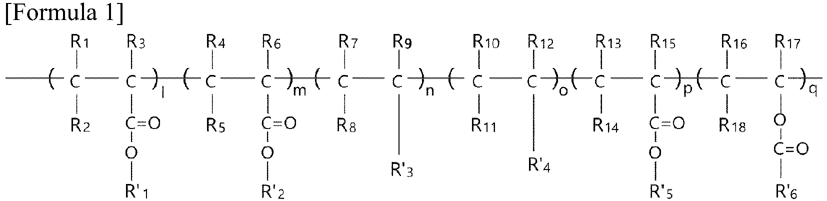

In Formula 1,
R₁ to R₁₈ are the same or different, and are each independently hydrogen or a straight-chain or branched-chain hydrocarbon having 1 to 4 carbon atoms,
R₁' is a straight-chain or branched-chain aliphatic hydrocarbon having 5 to 22 carbon atoms,
R₂' contains one or more substituted or unsubstituted aromatic or aliphatic rings,
R₃' contains one or more substituted or unsubstituted aromatic or aliphatic rings,
R₄' is one or more selected from the group consisting of cyano (CN), pyrrolidone (NC₄H₆O), carboxylic acid (COOH), amide, alkylamide, dialkylamide, alcohol, an epoxy group, caprolactam (C₅H₁₀CNO), morpholine (C₄H₈NO), and oxazolidone (C₃H₄NO₂),
R₅' and R₆' are each independently a straight-chain or branched-chain aliphatic hydrocarbon having 1 to 4 carbon atoms,
1 + m + n + o + p + q = 1, 0.05 ≤ 1 + o ≤ 0.80, 0.01 ≤ m + n ≤ 0.60, and 0.05 ≤ p + q ≤ 0.40.
(However, either m or n may be 0, either p or q may be 0, and o may be 0.)

In one embodiment, R₁ to R₁₈ in Formula 1 may all be hydrogen.

In one embodiment, R₁' in Formula 1 may include one or more selected from the group consisting of n-pentyl, n-hexyl, n-heptyl, n-octyl, 2-ethylhexyl, n-nonyl, n-decyl, n-undecyl, lauryl, n-dodecyl, n-tridecyl, n-tetradecyl, n-pentadecyl, cetyl, n-hexadecyl, n-heptadecyl, stearyl, n-octadecyl, n-nonadecyl, n-eicosyl, n-heneicosyl, n-docosyl, isopentyl, isoheptyl, isooctyl, isononyl, isodecyl, isoundecyl, isododecyl, isotridecyl, isotetradecyl, isopentadecyl, isocetyl, isohexadecyl, isoheptadecyl, isostearyl, isooctadecyl, isononadecyl, isoeicosyl, isoheneicosyl, and isodocosyl.

In one embodiment, R₂' and R₃' in Formula 1 may be the same or different, and may each independently include one or more selected from the group consisting of substituted or unsubstituted cyclopentyl, cyclohexyl, benzyl, phenyl, phenoxy, naphthalene, anthracene, and pyrene.

In one embodiment, R₅' and R₆' in Formula 1 may be the same or different, and may each independently include one or more selected from the group consisting of hydrogen, methyl, ethyl, propyl, isopropyl, n-butyl, isobutyl, and sec-butyl.

In one embodiment, a monomer containing R₁' in Formula 1 may be n-pentyl (meth)acrylate, n-hexyl (meth)acrylate, n-heptyl (meth)acrylate, n-octyl (meth)acrylate, 2-ethylhexyl (meth)acrylate, n-nonyl (meth)acrylate, n-decyl (meth)acrylate, n-undecyl (meth)acrylate, lauryl (meth)acrylate, n-dodecyl (meth)acrylate, n-tridecyl (meth)acrylate, n-tetradecyl (meth)acrylate, n-pentadecyl (meth)acrylate, cetyl (meth)acrylate, n-hexadecyl (meth)acrylate, n-heptadecyl (meth)acrylate, stearyl (meth)acrylate, n-nonadecyl (meth)acrylate, n-eicosyl (meth)acrylate, n-heneicosyl (meth)acrylate, n-docosyl (meth)acrylate, isopentyl (meth)acrylate, isoheptyl (meth)acrylate, isooctyl (meth)acrylate, isononyl (meth)acrylate, isodecyl (meth)acrylate, isoundecyl (meth)acrylate, isododecyl (meth)acrylate, isotridecyl (meth)acrylate, isotetradecyl (meth)acrylate, isopentadecyl (meth)acrylate, isocetyl (meth)acrylate, isohexadecyl (meth)acrylate, isoheptadecyl (meth)acrylate, isostearyl (meth)acrylate, isononadecyl (meth)acrylate, isoeicosyl (meth)acrylate, isoheneicosyl (meth)acrylate, isodocosyl (meth)acrylate, or a combination thereof, but is not limited thereto.

In one embodiment, a monomer containing R₂' in Formula 1 may be one or more selected from the group consisting of cyclopentyl acrylate, cyclohexyl acrylate, benzyl acrylate, 3-phenoxy benzyl acrylate, σ-phenyl phenoxy ethyl acrylate, σ-phenyl phenoxy ethyl methacrylate, (1-pyrene) 2-methyl-2-propenoate, 1-naphthyl acrylate, 1-naphthyl methacrylate, 2-naphthyl acrylate, 2-naphthyl methacrylate, 9-anthracene methyl acrylate, and 9-anthracene methyl methacrylate, and a monomer containing R₃' may be styrene.

In one embodiment, a monomer containing R₄' in Formula 1 may be one or more selected from the group consisting of acrylonitrile, vinylpyrrolidone, acrylic acid, methacrylic acid, itaconic acid, acrylamide, N-methyl acrylamide, 2-hydroxyethyl acrylate, 2-hydroxyethyl methacrylate, and glycidyl methacrylate.

In one embodiment, a monomer containing R₅' in Formula 1 may be one or more selected from the group consisting of methyl acrylate, methyl methacrylate, ethyl acrylate, ethyl methacrylate, butyl acrylate, and butyl methacrylate, and a monomer containing R₆' may be vinyl acetate.

In one embodiment, the copolymer may be a random or block copolymer, depending on the synthesis process.

In one embodiment, the copolymer may have a number average molecular weight of 8,000 or more and 40,000 or less.

For example, the number average molecular weight of the copolymer may be 8,000 or more and 35,000 or less, 8,000 or more and 30,000 or less, 8,000 or more and 25,000 or less, 8,000 or more and 20,000 or less, or 9,000 or more and 20,000 or less.

When the number average molecular weight of the copolymer falls below the aforementioned range, the electrochemical stability may not be achieved. In contrast, when the number average molecular weight exceeds the aforementioned range, the viscosity of the slurry composition may not decrease when injected into the electrode slurry composition as the molecular weight increases.

A viscosity reducer according to another aspect of the present disclosure may include the copolymer.

In a further aspect of the present disclosure, a cathode slurry composition may include the copolymer and a cathode active material.

In one embodiment, the cathode active material may be any cathode active material available in the art to which the present disclosure pertains. Specific examples of the cathode active material may include lithium metal; a lithium cobalt-based oxide, such as LiCoO₂; a lithium manganese-based oxide, such as Li₁₊ₓMn₂₋ₓO₄ (where x is in the range of 0 to 0.33), LiMnO₃, LiMn₂O₃, and LiMnO₂; a lithium copper oxide, such as Li₂CuO₂; a vanadium oxide, such as LiV₃O₈, V₂O₅, and Cu₂V₂O₇; a lithium nickel-based oxide represented by LiNi₁₋ₓMₓO₂ (where M is Co, Mn, Al, Cu, Fe, Mg, B, or Ga, and x is in the range of 0.01 to 0.3); a lithium manganese composite oxide represented by LiMn₂₋ₓMₓO₂ (where M is Co, Ni, Fe, Cr, Zn, or Ta, and x is in the range of 0.01 to 0.1) or Li₂Mn₃MO₈ (where M is Fe, Co, Ni, Cu, or Zn); a lithium-nickel-manganese-cobalt-based oxide represented by Li(NiₐCo_{b}Mn_{c})O₂ (where 0 < a < 1, 0 < b < 1, 0 < c < 1, and a + b + c = 1); sulfur or a disulfide compound; a phosphate, such as LiFePO₄, LiMnPO₄, LiCoPO₄, and LiNiPO₄; Fe₂(MoO₄)₃; and the like, but are not limited thereto.

Preferably, the cathode active material may be a lithium iron phosphate-based oxide represented by Li₁₊ₐFe₁₋ₓMₓPO_{4-b}A_{b} (where M is Mn, Ni, Co, Cu, Sc, Ti, Cr, V, or Zn, A is S, Se, F, Cl, or I, -0.5 < a < 0.5, 0 ≤ x < 0.5, and 0 ≤ b ≤ 0.1).

For example, the cathode active material may be LiFePO₄. Furthermore, the cathode active material may be doped with other metal elements on the surface of the particles or coated with a carbon-based material in order to improve electrical conductivity.

The cathode active material may be included in an amount in the range of 90 to 99 wt% based on the solid content. When the content of the active material is low, the battery may fail to exhibit high capacity. In contrast, when the content of the active material is excessively high, the adhesive strength, conductivity, and the like of the electrode may be reduced because the contents of a binder, a conductive additive, and the like decrease relatively.

In one embodiment, the cathode slurry composition may further include a conductive additive.

The conductive additive is not particularly limited, and may be appropriately selected depending on the types of battery and capacitor. For example, carbon such as graphite and activated carbon, carbon nanotubes, and the like may be used in lithium-ion secondary batteries. Additionally, in the case of nickel-hydrogen secondary batteries, cobalt oxide may be used, and nickel powder, cobalt oxide, titanium oxide, carbon, and the like may be used for an anode.

Examples of such carbon may include acetylene black, furnace black, graphite, carbon fibers, and fullerenes.

The amount of conductive additive used, based on 100 wt% of the electrode active material, is typically in the range of 0.1 to 10 wt% and preferably in the range of 0.1 to 5 wt%.

The lower the content of the conductive additive and the higher the content of the cathode active material, the greater the energy density of a secondary battery may be. Therefore, it is important to exhibit high efficiency even when using the same amount of the conductive additive.

The smaller and more evenly dispersed the conductive additive used in the electrode slurry for a secondary battery, the higher the conductive efficiency, which may lead to lower internal resistance, better output characteristics, and better life characteristics of the battery. The larger and more unevenly dispersed the conductive additive, the poorer the binding properties and the lower the conductivity, even when using the same amount, which may adversely affect the life characteristics and output characteristics of the battery.

In one embodiment, the cathode slurry composition may further include a binder.

As for the binder, any one of poly(meth)acrylic acid, poly(meth)acrylamide, carboxymethyl cellulose, polyvinylidene fluoride, poly(vinylidene fluoride-co-hexafluoropropylene) (P(VdF/HFP)), poly(vinyl acetate), polyvinyl alcohol, polyethylene oxide, polyvinylpyrrolidone, alkylated polyethylene oxide, polyvinyl ether, poly(methyl methacrylate), poly(ethyl acrylate), polytetrafluoroethylene, polyvinyl chloride, polyacrylonitrile, polyvinylpyridine, styrene-butadiene rubber, acrylonitrilebutadiene rubber, and copolymers thereof, or two or more of the foregoing may be selected for use. However, the binder is not limited thereto.

The content of the binder in the cathode slurry composition may be in the range of 0.3 wt% or more and 10 wt% or less when calculated on a solid content basis. The content of the binder in the cathode slurry composition is preferably in the range of 0.7 wt% or more and 8 wt% or less.

When the content of the binder falls below the aforementioned range, achieving sufficient binding strength between the current collector and the cathode active material or between the cathode active materials is deemed highly unlikely. In contrast, when the content of the binder exceeds the aforementioned range, the battery capacity may be reduced.

In one embodiment, the copolymer may be included in an amount of 0.05 wt% or more and 2.0 wt% or less based on 100 wt% of the total weight of the cathode slurry composition.

When the content of the copolymer falls below the aforementioned range, the viscosity reduction effect of the slurry composition may be reduced. In contrast, when the content of the copolymer exceeds the aforementioned range, the viscosity may decrease with the increasing content of the viscosity reducer. However, the content of the active material may decrease relatively accordingly, resulting in reduced energy density.

In one embodiment, the viscosity of a cathode slurry composition prepared as in Evaluation Example 2 below may be 3500 cps or less at a shear rate of 10/s.

In other words, the viscosity of the cathode slurry composition including the copolymer of the present application is 3500 cps or less, which is lower than that of a slurry without the use of any viscosity reducer, and thus can improve processability and production speed.

A cathode according to yet another aspect of the present application may include a current collector and a cathode active material layer formed by applying the cathode slurry composition.

The cathode may be manufactured through the following steps: (a) preparing a cathode slurry composition including a cathode active material and the copolymer of the present application, and (b) applying the cathode slurry composition on a cathode current collector, followed by drying.

The cathode slurry composition may be mixed by common stirring methods using common mixers such as a high-speed shear mixer, a homomixer, and a P/D mixer.

Step (b) is to manufacture the cathode for a lithium secondary battery by applying the cathode slurry composition, prepared in Step (a), on the cathode current collector, followed by drying.

In this case, there are no limitations in the methods of applying the cathode slurry composition. For example, methods such as doctor blade coating, dip coating, gravure coating, slit die coating, spin coating, comma coating, bar coating, reverse roll coating, screen coating, and cap coating may be performed to manufacture the cathode.

The cathode for a secondary battery, in which the cathode active material layer is ultimately formed by applying the cathode slurry composition, followed by drying, may be manufactured.

As the current collector, any material that is conductive and does not chemically react with the slurry for forming the electrode may be used. Representative examples thereof include an aluminum foil and a copper foil. A current collector having a thickness in the range of 3 to 50 µm may be selected for use.

In one embodiment, the binding strength between the current collector and the cathode active material layer of the cathode may be 4 gf/mm or more.

In other words, the cathode active material layer formed by applying the cathode slurry composition including the copolymer of the present application has excellent binding strength with the current collector, which is 4 gf/mm or more, and thus can prevent electrode detachment, thereby improving the life of a secondary battery with excellent life characteristics.

A secondary battery according to yet another aspect of the present application may include the cathode.

In one embodiment, the secondary battery may further include a separator.

A separator must be an insulator so that an anode is separable from a cathode, and is required to provide a passage through which only lithium ions can migrate. To this end, the wettability with an electrolyte needs to be good, and porous non-woven fabrics and porous polymer films such as polyethylene (PE)/polypropylene (PP) are used. In addition, a coated separator, for example, a ceramic-coated separator with enhanced thermal resistance and mechanical strength, may be used to prevent a short circuit of the battery, and such a coating may be applied in either a single-layer or multilayer form.

While the separator may be composed of a porous substrate, any porous substrate commonly used in electrochemical devices is usable as the porous substrate. For example, a polyolefin-based porous film or non-woven fabric may be used, but the separator is not particularly limited thereto.

The separator may be a porous substrate composed of any one selected from the group consisting of polyethylene, polypropylene, polybutylene, polypentene, polyethylene terephthalate, polybutylene terephthalate, polyester, polyacetal, polyamide, polycarbonate, polyimide, polyetheretherketone, polyethersulfone, polyphenylene oxide, polyphenylene sulfide, and polyethylene naphthalate, or a mixture of two or more of the foregoing.

The electrolyte of the lithium secondary battery, which is a lithium saltcontaining non-aqueous electrolyte, is composed of a solvent and a lithium salt. As the solvent, non-aqueous organic solvents, organic solid electrolytes, inorganic solid electrolytes, and the like are used.

Examples of the lithium salt, a material that is easily dissolved in the non-aqueous electrolyte, used may include LiCl, LiBr, LiI, LiClO₄, LiBF₄, LiB₁₀Cl₁₀, LiPF₆, LiAsF₆, LiSbF₆, LiAlCl₄, LiSCN, LiC₄BO₈, LiCF₃CO₂, LiCH₃SO₃, LiCF₃SO₃, LiN(SO₂CF₃)₂, LiN(SO₂F)₂, LiN(SO₂C₂F₅)₂, LiC₄F₉SO₃, LiC(CF₃SO₂)₃, (CF₃SO₂)·2NLi, lithium chloroborane, lithium lower aliphatic carboxylate, and lithium 4-phenyl borate imide.

Examples of the non-aqueous organic solvents used may include aprotic organic solvents such as N-methyl-2-pyrrolidone, propylene carbonate, ethylene carbonate, butylene carbonate, dimethyl carbonate, diethyl carbonate, ethyl methyl carbonate, γ-butyrolactone, 1,2-dimethoxy ethane, 1,2-diethoxy ethane, tetrahydroxy franc, 2-methyl tetrahydrofuran, dimethyl sulfoxide, 1,3-dioxolane, 4-methyl-1,3-dioxene, diethyl ether, formamide, dimethylformamide, dioxolane, acetonitrile, nitromethane, methyl formate, methyl acetate, phosphoric acid triester, trimethoxy methane, dioxolane derivatives, sulfolane, methylsulfolane, 1,3-dimethyl-2-imidazolidinone, propylene carbonate derivatives, tetrahydrofuran derivatives, ether, methyl propionate, and ethyl propionate.

Examples of the organic solid electrolyte used may include polyethylene derivatives, polyethylene oxide derivatives, polypropylene oxide derivatives, phosphoric acid ester polymers, poly agitation lysine, polyester sulfide, polyvinyl alcohol, polyvinylidene fluoride, and polymers containing secondary dissociation groups.

Examples of the inorganic solid electrolyte used may include nitrides, halides, sulfates, and the like of Li, such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, and Li₃PO₄-Li₂S-SiS₂.

In addition, the non-aqueous electrolyte may further include other additives for the purposes of improving the charge and discharge characteristics, flame retardancy, and the like. Examples of such additives may include pyridine, triethyl phosphite, triethanolamine, cyclic ether, ethylene diamine, n-glyme, hexaphosphoric acid triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, aluminum trichloride, fluoroethylene carbonate (FEC), propene sultone (PRS), and vinylene carbonate (VC).

The lithium secondary battery according to the present disclosure may be subjected to folding and lamination stacking processes of the separator and the electrodes, in addition to a typical winding process. In addition, a case of the battery may be cylindrical, prismatic, pouch-type, coin-type, or the like. Furthermore, such a lithium secondary battery may be used in small-sized devices or medium- to large-sized devices such as automobiles and electronic devices.

### Mode for Invention

Hereinafter, the present disclosure will be described in more detail through examples. However, the following examples are intended to explain the present disclosure in more detail, and the scope of the present disclosure is not limited by the following examples.

### Examples and Comparative Examples: Preparation of Copolymer

### [Example 1]

To a five-necked flask reactor, 70 g of N-methyl pyrrolidone (NMP) was added as a solvent. Then, based on 100 mol% of the total number of moles of monomers to be copolymerized, 36 mol% of styrene (ST), 36 mol% of stearyl acrylate (SA), 18 mol% of acrylic acid (AA), and 10 mol% of methyl acrylate (MA) were added, followed by installation of a reflux condenser and a thermometer. Thereafter, the temperature was raised to 75°C under nitrogen purging, thereby preparing a solution.

Subsequently, 0.15 g of 2,2'-azobis-2,4-dimethyl valeronitrile was dissolved in 20 g of NMP and added dropwise to the above solution for 30 minutes. After completion of the dropwise addition, the resulting mixture was maintained at 75°C for 7 hours, thereby preparing a copolymer.

### [Example 2]

A copolymer was prepared in the same manner as in Example 1, except that 10 mol% of vinyl acetate (VAc) was used instead of 10 mol% of methyl acrylate (MA).

### [Example 3]

A copolymer was prepared in the same manner as in Example 1, except that 10 mol% of ethyl acrylate (EA) was used instead of 10 mol% of methyl acrylate (MA).

### [Comparative Example 1]

A copolymer was prepared in the same manner as in Example 1, except that methyl acrylate (MA) was not used, styrene (ST) was used at 40 mol% instead of 36 mol%, stearyl acrylate (SA) was used at 40 mol% instead of 36 mol%, and acrylic acid (AA) was used at 20 mol% instead of 18 mol%.

### [Comparative Example 2]

A copolymer was prepared in the same manner as in Example 1, except that methyl acrylate (MA) was used at 100 mol%, and styrene (ST), stearyl acrylate (SA), and acrylic acid (AA) were not used.

### [Comparative Example 3]

A copolymer was prepared in the same manner as in Example 1, except that vinyl acetate (VAc) was used at 100 mol%, and styrene (ST), stearyl acrylate (SA), acrylic acid (AA), and methyl acrylate (MA) were not used.

### [Comparative Example 4]

A copolymer was prepared in the same manner as in Example 1, except that ethyl acrylate (EA) was used at 100 mol%, and styrene (ST), stearyl acrylate (SA), acrylic acid (AA), and methyl acrylate (MA) were not used.

Table 1 below shows the content (mol%) of monomers used for the preparation of copolymers of Examples 1 to 3 and Comparative Examples 1 to 4.

**[Table 1]**

| | Monomer Content (mol%) | | | | | |
|---|---|---|---|---|---|---|
| | ST | SA | AA | MA | VAc | EA |
| Example 1 | 36 | 36 | 18 | 10 | - | - |
| Example 2 | 36 | 36 | 18 | - | 10 | - |
| Example 3 | 36 | 36 | 18 | - | - | 10 |
| Comparative Example 1 | 40 | 40 | 20 | - | - | - |
| Comparative Example 2 | - | - | - | 100 | - | - |
| Comparative Example 3 | - | - | - | - | 100 | - |
| Comparative Example 4 | - | - | - | - | - | 100 |

In Table 1, ST denotes styrene, SA denotes stearyl acrylate, AA denotes acrylic acid, MA denotes methyl acrylate, VAc denotes vinyl acetate, and EA denotes ethyl acrylate.

### [Evaluation Examples]

### Evaluation Example 1: Measurement of Number Average Molecular Weight (Mn) of Copolymer

The number average molecular weight (Mn) of the copolymers prepared in Examples 1 to 3 and Comparative Examples 1 to 4 was measured by gel permeation chromatography (GPC) with tetrahydrofuran (THF) serving as a solvent.

The measured number average molecular weight of the copolymers is shown in Table 2 below.

**[Table 2]**

| Copolymer | Number average molecular weight (Mn, g/mol) |
|---|---|
| Example 1 | 14,153 |
| Example 2 | 13,288 |
| Example 3 | 14,724 |
| Comparative Example 1 | 13,319 |
| Comparative Example 2 | 12,932 |
| Comparative Example 3 | 13,127 |
| Comparative Example 4 | 12,856 |

Even polymers having the same composition typically exhibit different physical properties depending on molecular weight. Therefore, a viscosity reducer including a copolymer having a similar number average molecular weight was synthesized.

### Evaluation Example 2: Measurement of Viscosity of Cathode Slurry Composition

A cathode slurry composition of Preparation Example 1-1 was prepared by mixing 0.2 g of a viscosity reducer including the copolymer of Example 1, 40 g of a lithium iron phosphate compound serving as a cathode active material, 14.5 g of polyvinylidene fluoride (PVdF) dissolved in NMP at 8 wt%, 4.8 g of a multi-walled carbon nanotube (MWCNT) dispersion, and 5 g of NMP using a planetary centrifugal mixer (ARE-210, Thinky). In this case, the solid content of the slurry was 60 wt%.

Cathode slurry compositions of Preparation Examples 1-2 and 1-3 and Comparative Preparation Examples 1-1 to 1-4 were prepared by changing the type of viscosity reducer. Additionally, a cathode slurry composition of Comparative Preparation Example 1-5 was prepared without adding a viscosity reducer. Table 3 below shows the types of copolymers included in the viscosity reducers used in the cathode slurry compositions of Preparation Examples 1-2 and 1-3 and Comparative Preparation Examples 1-1 to 1-4.

**[Table 3]**

| Cathode slurry composition | Copolymer included in viscosity reducer |
|---|---|
| Preparation Example 1-1 | Example 1 |
| Preparation Example 1-2 | Example 2 |
| Preparation Example 1-3 | Example 3 |
| Comparative Preparation Example 1-1 | Comparative Example 1 |
| Comparative Preparation Example 1-2 | Comparative Example 2 |
| Comparative Preparation Example 1-3 | Comparative Example 3 |
| Comparative Preparation Example 1-4 | Comparative Example 4 |

The viscosity of the cathode slurry compositions of Preparation Examples 1-1 to 1-3 and Comparative Preparation Examples 1-1 to 1-5 was measured using a HAAKE MARS rheometer at shear rates of 1/s and 10/s.

The measured viscosity of the cathode slurry compositions is shown in Table 4 below.

**[Table 4]**

| Cathode slurry composition | Viscosity at shear rate of 1/s (cps) | Viscosity at shear rate of 10/s (cps) |
|---|---|---|
| Preparation Example 1-1 | 9,240 | 2,490 |
| Preparation Example 1-2 | 8,580 | 2,610 |
| Preparation Example 1-3 | 10,300 | 2,270 |
| Comparative Preparation Example 1-1 | 8,220 | 2,120 |
| Comparative Preparation Example 1-2 | 113,600 | 14,520 |
| Comparative Preparation Example 1-3 | 121,080 | 11,280 |
| Comparative Preparation Example 1-4 | 112,690 | 13,300 |
| Comparative Preparation Example 1-5 | 14,760 | 3,840 |

At both shear rates of 1/s and 10/s, it was confirmed that the cathode slurry compositions of Comparative Preparation Examples 1-2, 1-3, and 1-4, which included the viscosity reducers including the copolymers of Comparative Examples 2, 3, or 4, had much higher viscosity than the cathode slurry composition of Comparative Preparation Example 1-5 without a viscosity reducer.

In other words, the fact that polymers prepared using a single monomer, such as methyl acrylate, vinyl acetate, or ethyl acrylate, which increase the binding strength of an electrode, did not exhibit an effect of reducing the viscosity of a cathode slurry composition, but rather significantly increased the viscosity, was confirmed.

### Evaluation Example 3: Measurement of Binding Strength of Cathode

The cathode slurry composition of any one of Preparation Examples 1-1 to 1-3 and Comparative Preparation Examples 1-1 to 1-4 was applied on an aluminum foil having a thickness of 20 µm using a doctor blade.

The electrode coated with the cathode slurry composition was dried in an oven at 130°C for 12 hours or more, followed by rolling to achieve a mixture density of 2.2 g/cc. Subsequently, vacuum drying was performed at 110°C, thereby manufacturing cathodes of Preparation Examples 2-1 to 2-3 and Comparative Preparation Examples 2-1 to 2-4.

The manufactured cathodes were cut to a width of 25 mm, and the binding strength between the aluminum foil and the coating, that is, between the current collector and the cathode slurry composition coating layer, was measured using a universal testing machine (UTM).

The measured binding strength of the cathodes of Preparation Examples 2-1 to 2-3 and Comparative Preparation Examples 2-1 to 2-4 is shown in Table 5 below.

**[Table 5]**

| Cathode | Binding strength (gf/mm) |
|---|---|
| Preparation Example 2-1 | 10.1 |
| Preparation Example 2-2 | 9.7 |
| Preparation Example 2-3 | 9.8 |
| Comparative Preparation Example 2-1 | 3.8 |
| Comparative Preparation Example 2-2 | 11.8 |
| Comparative Preparation Example 2-3 | 12.2 |
| Comparative Preparation Example 2-4 | 11.9 |

The cathode of Comparative Preparation Example 2-1, manufactured using the cathode slurry composition of Comparative Preparation Example 1-1, which exhibited the lowest viscosity, was confirmed to exhibit significantly low binding strength between the current collector and the cathode slurry composition coating layer.

As can be confirmed from Evaluation Examples 2 and 3, only when a copolymer satisfying the monomer composition and content of the present application is included, both the viscosity of the cathode slurry composition and the binding strength can be simultaneously achieved at desired levels.

In other words, the viscosity of the cathode slurry composition is low only when a copolymer satisfying the monomer composition and content of the present application is included, thereby increasing the solid content of the slurry and improving the electrode production rate. At the same time, the binding strength between the current collector and the cathode slurry composition coating layer is high, thereby preventing a reduction in battery life due to electrode detachment.

The scope of the present disclosure is defined by the appended claims rather than the detailed description presented above. All changes or modifications derived from the meaning and scope of the claims and the concept of equivalents should be construed to fall within the scope of the present disclosure.

### Industrial Applicability

As described above, a cathode slurry composition including a copolymer of the present disclosure exhibits low viscosity even when the solid content of the slurry is high, and thus can improve processability and production speed.

In addition, the cathode slurry composition including the copolymer of the present disclosure exhibits excellent dispersibility and enables the manufacture of a cathode having superior binding strength between a cathode active material and a current collector.

## Claims

1. A copolymer comprising:
one or more monomer units selected from the group consisting of an acrylate-based monomer unit containing one or more substituted or unsubstituted aromatic or aliphatic rings and a vinyl-based monomer unit containing one or more substituted or unsubstituted aromatic or aliphatic rings;
one or more monomer units selected from the group consisting of an acrylate-based monomer unit containing a straight-chain or branched-chain aliphatic hydrocarbon having 5 to 22 carbon atoms and a polar monomer unit comprising one or more selected from the group consisting of cyano (CN), pyrrolidone (NC₄H₆O), carboxylic acid (COOH), amide, alkylamide, dialkylamide, alcohol, an epoxy group, caprolactam (C₅H₁₀CNO), morpholine (C₄H₈NO), and oxazolidone (C₃H₄NO₂); and
one or more monomer units selected from the group consisting of an acrylate-based monomer unit containing a straight-chain or branched-chain aliphatic hydrocarbon having 1 to 4 carbon atoms and a vinyl acetate-based monomer unit.

2. The copolymer of claim 1, wherein the one or more monomer units selected from the group consisting of the acrylate-based monomer unit containing one or more substituted or unsubstituted aromatic or aliphatic rings and the vinyl-based monomer unit containing one or more substituted or unsubstituted aromatic or aliphatic rings are formed by polymerization of styrene, cyclopentyl acrylate, cyclohexyl acrylate, benzyl acrylate, 3-phenoxy benzyl acrylate, σ-phenyl phenoxy ethyl acrylate, σ-phenyl phenoxy ethyl methacrylate, (1-pyrene) 2-methyl-2-propenoate, 1-naphthyl acrylate, 1-naphthyl methacrylate, 2-naphthyl acrylate, 2-naphthyl methacrylate, 9-anthracene methyl acrylate, 9-anthracene methyl methacrylate, or a combination thereof.

3. The copolymer of claim 1, wherein the acrylate-based monomer unit containing a straight-chain or branched-chain aliphatic hydrocarbon having 5 to 22 carbon atoms is formed by polymerization of n-pentyl (meth)acrylate, n-hexyl (meth)acrylate, n-heptyl (meth)acrylate, n-octyl (meth)acrylate, 2-ethylhexyl (meth)acrylate, n-nonyl (meth)acrylate, n-decyl (meth)acrylate, n-undecyl (meth)acrylate, lauryl (meth)acrylate, n-dodecyl (meth)acrylate, n-tridecyl (meth)acrylate, n-tetradecyl (meth)acrylate, n-pentadecyl (meth)acrylate, cetyl (meth)acrylate, n-hexadecyl (meth)acrylate, n-heptadecyl (meth)acrylate, stearyl (meth)acrylate, n-nonadecyl (meth)acrylate, n-eicosyl (meth)acrylate, n-heneicosyl (meth)acrylate, n-docosyl (meth)acrylate, isopentyl (meth)acrylate, isoheptyl (meth)acrylate, isooctyl (meth)acrylate, isononyl (meth)acrylate, isodecyl (meth)acrylate, isoundecyl (meth)acrylate, isododecyl (meth)acrylate, isotridecyl (meth)acrylate, isotetradecyl (meth)acrylate, isopentadecyl (meth)acrylate, isocetyl (meth)acrylate, isohexadecyl (meth)acrylate, isoheptadecyl (meth)acrylate, isostearyl (meth)acrylate, isononadecyl (meth)acrylate, isoeicosyl (meth)acrylate, isoheneicosyl (meth)acrylate, isodocosyl (meth)acrylate, or a combination thereof.

4. The copolymer of claim 1, wherein the polar monomer unit comprising one or more selected from the group consisting of cyano (CN), pyrrolidone (NC₄H₆O), carboxylic acid (COOH), amide, alkylamide, dialkylamide, alcohol, an epoxy group, caprolactam (C₅H₁₀CNO), morpholine (C₄H₈NO), and oxazolidone (C₃H₄NO₂) is formed by polymerization of acrylonitrile, vinylpyrrolidone, acrylic acid, methacrylic acid, itaconic acid, acrylamide, N-methyl acrylamide, 2-hydroxyethyl acrylate, 2-hydroxyethyl methacrylate, glycidyl methacrylate, or a combination thereof.

5. The copolymer of claim 1, wherein the one or more monomer units selected from the group consisting of the acrylate-based monomer unit containing a straight-chain or branched-chain aliphatic hydrocarbon having 1 to 4 carbon atoms and the vinyl acetate-based monomer unit are formed by polymerization of vinyl acetate, methyl acrylate, methyl methacrylate, ethyl acrylate, ethyl methacrylate, butyl acrylate, butyl methacrylate, or a combination thereof.

6. The copolymer of claim 1, wherein the copolymer, based on 100 mol% thereof, comprises: 1 mol% or more and 60 mol% or less of the one or more monomer units selected from the group consisting of the acrylate-based monomer unit containing one or more substituted or unsubstituted aromatic or aliphatic rings and the vinyl-based monomer unit containing one or more substituted or unsubstituted aromatic or aliphatic rings,
5 mol% or more and 80 mol% or less of the one or more monomer units selected from the group consisting of the acrylate-based monomer unit containing a straight-chain or branched-chain aliphatic hydrocarbon having 5 to 22 carbon atoms and the polar monomer unit comprising one or more selected from the group consisting of cyano (CN), pyrrolidone (NC₄H₆O), carboxylic acid (COOH), amide, alkylamide, dialkylamide, alcohol, an epoxy group, caprolactam (C₅H₁₀CNO), morpholine (C₄H₈NO), and oxazolidone (C₃H₄NO₂),
5 mol% or more and 40 mol% or less of the one or more monomer units selected from the group consisting of the acrylate-based monomer unit containing a straight-chain or branched-chain aliphatic hydrocarbon having 1 to 4 carbon atoms and the vinyl acetate-based monomer unit.

7. The copolymer of claim 1, wherein the copolymer is represented by Formula 1 below, 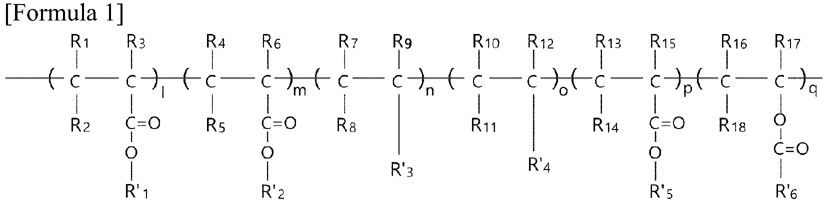 where in Formula 1,
R₁ to R₁₈ are the same or different, and are each independently hydrogen or a straight-chain or branched-chain hydrocarbon having 1 to 4 carbon atoms,
R₁' is a straight-chain or branched-chain aliphatic hydrocarbon having 5 to 22 carbon atoms,
R₂' contains one or more substituted or unsubstituted aromatic or aliphatic rings,
R₃' contains one or more substituted or unsubstituted aromatic or aliphatic rings,
R₄' is one or more selected from the group consisting of cyano (CN), pyrrolidone (NC₄H₆O), carboxylic acid (COOH), amide, alkylamide, dialkylamide, alcohol, an epoxy group, caprolactam (C₅H₁₀CNO), morpholine (C₄H₈NO), and oxazolidone (C₃H₄NO₂),
R₅' and R₆' are each independently a straight-chain or branched-chain aliphatic hydrocarbon having 1 to 4 carbon atoms,
l + m + n + o + p + q = 1, 0.05 ≤ l + o ≤ 0.80, 0.01 ≤ m + n ≤ 0.60, and 0.05 ≤ p + q ≤ 0.40
(wherein either m or n may be 0, either p or q may be 0, and o may be 0).

8. The copolymer of claim 7, wherein R₁' comprises one or more selected from the group consisting of n-pentyl, n-hexyl, n-heptyl, n-octyl, 2-ethylhexyl, n-nonyl, n-decyl, n-undecyl, lauryl, n-dodecyl, n-tridecyl, n-tetradecyl, n-pentadecyl, cetyl, n-hexadecyl, n-heptadecyl, stearyl, n-octadecyl, n-nonadecyl, n-eicosyl, n-heneicosyl, n-docosyl, isopentyl, isoheptyl, isooctyl, isononyl, isodecyl, isoundecyl, isododecyl, isotridecyl, isotetradecyl, isopentadecyl, isocetyl, isohexadecyl, isoheptadecyl, isostearyl, isooctadecyl, isononadecyl, isoeicosyl, isoheneicosyl, and isodocosyl.

9. The copolymer of claim 7, wherein R₂' and R₃' are the same or different, and each independently comprise one or more selected from the group consisting of substituted or unsubstituted cyclopentyl, cyclohexyl, benzyl, phenyl, phenoxy, naphthalene, anthracene, and pyrene.

10. The copolymer of claim 7, wherein R₅' and R₆' are the same or different, and each independently comprise one or more selected from the group consisting of hydrogen, methyl, ethyl, propyl, isopropyl, n-butyl, isobutyl, and sec-butyl.

11. The copolymer of claim 7, wherein a monomer containing R₂' is one or more selected from the group consisting of cyclopentyl acrylate, cyclohexyl acrylate, benzyl acrylate, 3-phenoxy benzyl acrylate, σ-phenyl phenoxy ethyl acrylate, σ-phenyl phenoxy ethyl methacrylate, (1-pyrene) 2-methyl-2-propenoate, 1-naphthyl acrylate, 1-naphthyl methacrylate, 2-naphthyl acrylate, 2-naphthyl methacrylate, 9-anthracene methyl acrylate, and 9-anthracene methyl methacrylate, and
a monomer containing R₃' is styrene.

12. The copolymer of claim 7, wherein a monomer containing R₄' is one or more selected from the group consisting of acrylonitrile, vinylpyrrolidone, acrylic acid, methacrylic acid, itaconic acid, acrylamide, N-methyl acrylamide, 2-hydroxyethyl acrylate, 2-hydroxyethyl methacrylate, and glycidyl methacrylate.

13. The copolymer of claim 7, wherein a monomer containing R₅' is one or more selected from the group consisting of methyl acrylate, methyl methacrylate, ethyl acrylate, ethyl methacrylate, butyl acrylate, and butyl methacrylate, and
a monomer containing R₆' is vinyl acetate.

14. The copolymer of claim 1, wherein the copolymer is a random or block copolymer.

15. The copolymer of claim 1, wherein the copolymer has a number average molecular weight of 8,000 or more and 40,000 or less.

16. A viscosity reducer comprising:
the copolymer of any one of claims 1 to 15.

17. A cathode slurry composition comprising:
the copolymer of any one of claims 1 to 15; and
a cathode active material.

18. The cathode slurry composition of claim 17, wherein the copolymer is included in an amount of 0.05 wt% or more and 2.0 wt% or less based on 100 wt% of the total weight of the cathode slurry composition.

19. A cathode comprising:
a current collector; and
a cathode active material layer formed by applying the cathode slurry composition of claim 17 on the current collector.

20. The cathode of claim 19, wherein a binding strength between the current collector and the cathode active material layer is 4 gf/mm or more.

21. A secondary battery comprising:
the cathode of claim 19.
